(19) Europäisches Patentamt / European Patent Office / Office européen des brevets

(11) **EP 4 685 982 A1**

(12) **EUROPEAN PATENT APPLICATION**
published in accordance with Art. 153(4) EPC

(43) Date of publication:
**28.01.2026  Bulletin 2026/05**

(21) Application number: **24773748.9**

(22) Date of filing: **03.01.2024**

(51) International Patent Classification (IPC):
***H01M 50/528*** (2021.01)

(52) Cooperative Patent Classification (CPC):
**H01M 50/528; Y02E 60/10**

(86) International application number:
**PCT/CN2024/070289**

(87) International publication number:
**WO 2024/193178 (26.09.2024 Gazette 2024/39)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority:  **23.03.2023  CN 202320730059 U**

(71) Applicant: **Sunwoda Mobility Energy Technology Co., Ltd.**
**Shenzhen, Guangdong 518107 (CN)**

(72) Inventors:
• HU, Mingjiang
  Shenzhen, Guangdong 518107 (CN)
• YANG, Wei
  Shenzhen, Guangdong 518107 (CN)
• YUAN, Hao
  Shenzhen, Guangdong 518107 (CN)
• ZHANG, Tong
  Shenzhen, Guangdong 518107 (CN)

(74) Representative: **Elzaburu S.L.P.**
**Edificio Torre de Cristal**
**Paseo de la Castellana 259 C, planta 28**
**28046 Madrid (ES)**

(54) **SECONDARY BATTERY**

(57)    A secondary battery is disclosed, which includes a connecting sheet and a terminal post; the connecting sheet has a welding surface; the terminal post and the connecting sheet are stacked, and the welding surface faces the terminal post; the connecting sheet is fixed to the terminal post by welding, and a welding part is formed between the connecting sheet and the terminal post; at least part of the welding part is provided in an interior of the connecting sheet and at least part of the welding part is provided in an interior of the terminal post; the welding part penetrates through the welding surface, and forms a welding track on the welding surface.

FIG. 1

EP 4 685 982 A1

**Description**

The present application claims priority to Chinese patent application No. 202320730059.0 filed with China National Intellectual Property Administration on March 23, 2023, and entitled "Secondary Battery", which is hereby incorporated by reference in its entirety.

**TECHNICAL FIELD**

Embodiments of the present application relate to, but are not limited to, a secondary battery.

**BACKGROUND**

Presently, there are multiple ways to connect a cell assembly to a terminal post of a secondary battery. One way is to directly weld tabs to positive and negative terminal posts of the battery. Another way is to weld the tabs to adapter sheets firstly, and then weld the adapter sheets to the positive and negative terminal posts. These two methods can realize an electrical connection between the cell assembly and the positive and negative terminal posts.

**TECHNICAL SOLUTION**

In a first aspect, embodiments of the present application provides a secondary battery, including a connecting sheet and a terminal post, where the connecting sheet has a welding surface; the terminal post and the connecting sheet are stacked, and the welding surface faces the terminal post; the connecting sheet is fixed to the terminal post by welding, and a welding part is formed between the connecting sheet and the terminal post; at least part of the welding part is provided in an interior of the connecting sheet and at least part of the welding part is provided in an interior of the terminal post; the welding part penetrates through the welding surface, and forms a welding track on the welding surface; an effective fusion width A of the welding part, an area S of the welding surface, and a length L of the welding track satisfy the following relationship: $2 \leq S/(A*L) \leq 20000$, where the effective fusion width A is a maximum width of the welding track.

Optionally, the effective fusion width A satisfies: $0.1 \, \text{mm} \leq A \leq 3 \, \text{mm}$, and a first effective fusion depth B satisfies: $0.1 \, \text{mm} \leq B \leq 3 \, \text{mm}$, where the first effective fusion depth B is a maximum length by which the welding part extends into the interior of the terminal post, and A/B has a range of 0.5-20.

Optionally, the effective fusion width A of the welding part, the area S of the welding surface, and the length L of the welding track satisfy: $10 \leq S/(A*L) \leq 1000$.

Optionally, the effective fusion width A of the welding part, the area S of the welding surface, and the length L of the welding track line satisfy: $10 \leq S/(A*L) \leq 100$.

Optionally, the first effective fusion depth B and a second effective fusion depth D satisfy the following relationship: $0.25 \leq B/D \leq 7.5$, where the second effective fusion depth D is a maximum length by which the welding part extends into the interior of the connecting sheet.

Optionally, the area S of the welding surface satisfies: $10 \, \text{mm}^2 \leq S \leq 2000 \, \text{mm}^2$.

Optionally, the area S of the welding surface satisfies: $1000 \, \text{mm}^2 \leq S \leq 2000 \, \text{mm}^2$.

Optionally, the area S of the welding surface satisfies: $50 \, \text{mm}^2 \leq S \leq 1500 \, \text{mm}^2$.

Optionally, the length L of the welding track line satisfies: $1 \, \text{mm} \leq L \leq 200 \, \text{mm}$.

Optionally, the length L of the welding track line satisfies: $10 \, \text{mm} \leq L \leq 200 \, \text{mm}$.

Optionally, the length L of the welding track line satisfies: $20 \, \text{mm} \leq L \leq 100 \, \text{mm}$.

Optionally, the connecting sheet has a thickness of 0.4 mm - 2 mm.

Optionally, the connecting sheet is an adapter sheet, a tab, or a current collector plate.

Optionally, the track line of the welding part on the welding surface is a combination of one or more of a spiral shape, a serpentine shape, a circular shape, an elliptical shape, or a linear shape.

Optionally, a peeling force between the terminal post and the connecting sheet is 248 N - 973 N.

**BRIEF DESCRIPTION OF DRAWINGS**

In order to illustrate the technical solutions in the embodiments of the present application more clearly, the accompanying drawings needed for describing the embodiments will be briefly introduced hereinafter. It is obvious that the accompanying drawings in the following description are merely some embodiments of the present application. For those skilled in the art, other accompanying drawings can also be obtained based on these accompanying drawings without creative labor.

FIG. 1 is an axial-side cross-sectional view of a secondary battery provided in an embodiment of the present application.

FIG. 2 is a schematic cross-sectional view of a secondary battery provided in an embodiment of the present application.

FIG. 3 is a schematic enlarged view of position A in FIG. 2 of the present application.

FIG. 4 is a schematic exploded view of a secondary battery provided in an embodiment of the present application.

FIG. 5 is another axial-side cross-sectional view of a secondary battery provided in an embodiment of the present application.

FIG. 6 is a schematic cross-sectional view of a secondary battery provided in an embodiment of the present application.

FIG. 7 is a schematic enlarged view of position B in FIG. 6 of the present application.

FIG. 8 is a schematic cross-sectional view of a terminal post provided in an embodiment of the present application.

FIG. 9 is a top view of a secondary battery provided in an embodiment of the present application.

FIG. 10 is another top view of a secondary battery provided in an embodiment of the present application.

FIG. 11 is another top view of a secondary battery provided in an embodiment of the present application.

FIG. 12 is another top view of a secondary battery provided in an embodiment of the present application.

FIG. 13 is another top view of a secondary battery provided in an embodiment of the present application.

FIG. 14 is another top view of a secondary battery provided in an embodiment of the present application.

## DESCRIPTION OF EMBODIMENTS

The technical solutions in the embodiments of the present application will be clearly and completely described hereinafter in combination with the accompanying drawings in the embodiments of the present application. It is obvious that the embodiments described are merely a part, rather than all, of the embodiments of the present application. Based on the embodiments in the present application, all other embodiments obtained by those skilled in the art without creative labor shall fall within the protection scope of the present application.

At present, there is a problem of insufficient current flow at an electrical connection between an adapter sheet and a terminal post or between a tab and a terminal post, which is prone to cause disconnection or temperature rise of a battery and leads to safety issues; or there is a problem that an excessive area of weld spatter leads to an increase in battery internal resistance and thus causes safety issues of the battery. Therefore, how to ensure the current flow of the battery while reducing the area of the weld spatter in the electrical connection between the connecting sheet and the terminal post or between the tab and the terminal post to improve the safety performance of the battery has become an urgent problem to be solved.

The embodiments of the present application provide a secondary battery and a power battery to solve the above problems, which will be described in detail respectively below.

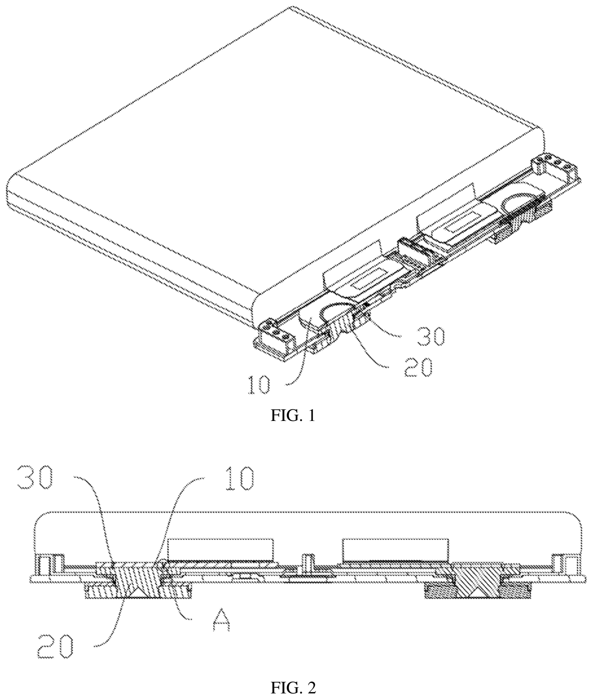

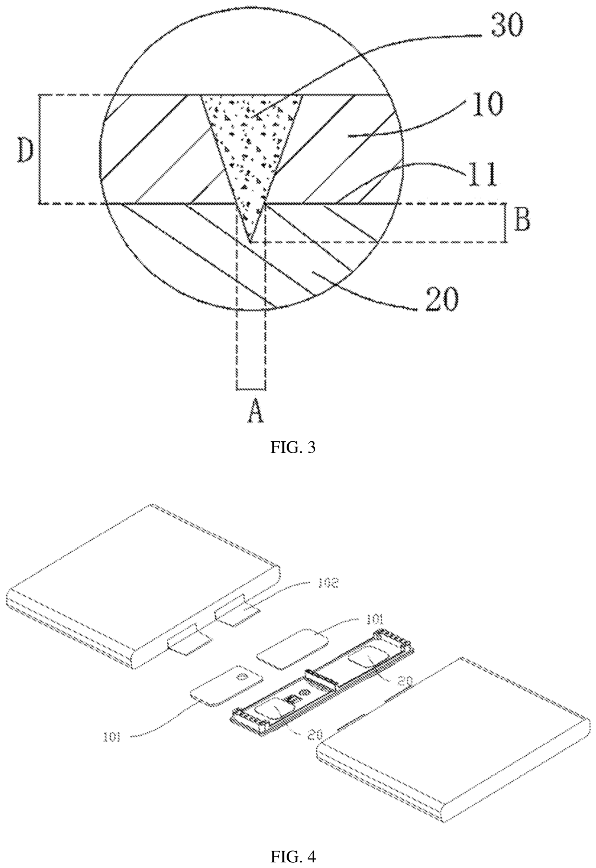

Firstly, referring to FIG. 1, FIG. 2, and FIG. 3; FIG. 1 shows an axial-side cross-sectional view of a secondary battery provided in an embodiment of the present application; FIG. 2 shows a schematic cross-sectional view of a secondary battery provided in an embodiment of the present application; FIG. 3 shows a schematic enlarged view of position A in FIG. 2 of the present application; a secondary battery includes:

a connecting sheet 10, where the connecting sheet 10 has a welding surface 11;

a terminal post 20, where the terminal post 20 and the connecting sheet 10 are stacked, and the welding surface 11 faces the terminal post 20;

the connecting sheet 10 and the terminal post 20 are welded at the welding surface 11 to form a welding part 30; at least part of the welding part 30 is provided in an interior of the connecting sheet 10 and at least part of the welding part 30 is provided in an interior of the terminal post 20; the welding part 30 penetrates through the welding surface 11, and forms a welding track on the welding surface;

an effective fusion width A of the welding part 30, an area S of the welding surface 11, and a length L of the track of the welding part 30 on the welding surface 11 satisfy the following relationship:

$$2 \le S/(A*L) \le 20000,$$

where the effective fusion width A is a maximum width of the welding track. It should be noted that the effective fusion width A being the maximum width of the welding track refers to a maximum width of the welding track in a direction parallel to the welding surface. A first effective fusion depth B is a maximum length by which the welding part 30 extends into the interior of the terminal post 20.

In the present application, by providing that the area S of the welding surface 11 between the connecting sheet 10 and the terminal post 20 and the length L of the track line of the welding part 30 on the welding surface 11 satisfy $2 \leq S/(A*L) \leq 20000$, a sufficient current flow area is guaranteed between the connecting sheet 10 and the terminal post 20 by the welding part 30, avoiding the problems of disconnection or temperature rise of the battery caused by insufficient current flow area between the connecting sheet 10 and the terminal post 20; at the same time, there are less weld spatter, avoiding an increase in battery internal resistance due to an excessive area ratio of the spatter, which causes safety issues of the battery.

Specifically, the connecting sheet 10 is made of a conductive material, such as metal or graphite, so that it can realize electrical connection after the connecting sheet 10 is welded to the terminal post 20. In some embodiments of the present application, referring to FIG. 4, which shows a schematic exploded view of a secondary battery in an embodiment of the present application, where the connecting sheet 10 may be an adapter sheet 101, a tab 102, or a current collector. That is, the adapter sheet 101, the tab 102, or the current collector may be directly welded to the terminal post 20.

Exemplarily, in a case that the connecting sheet 10 is an adapter sheet, when the cell assembly has a tab, the tab can be welded to the adapter sheet, and the adapter sheet can be welded to the terminal post to achieve the electrical connection between the cell assembly and the terminal post; if the current collector in the cell assembly is formed as a full tab, the current collector can be welded to the adapter sheet, and the adapter sheet can be welded to the terminal post to achieve the electrical connection between the cell assembly and the terminal post.

Exemplarily, when the connecting sheet 10 is a tab, the tab can be welded to the terminal post to achieve the electrical connection between the cell assembly and the terminal post.

Exemplarily, when the connecting sheet 10 is a current collector, the current collector can be welded to the terminal post to achieve the electrical connection between the cell assembly and the terminal post.

Exemplarily, the connecting sheet 10 can has a regular shape such as a circle shape, a square shape, and a regular-hexagonal shape, or other irregular shapes. It should be noted that the welding surface 11 is a surface of the connecting sheet 10 facing the terminal post 20. In some embodiments of the present application, for example, in the embodiment where the connecting sheet 10 is an adapter sheet 101, the area S of the welding surface 11 refers to an area enclosed by the shape of the adapter sheet 101; for instance, for the connecting sheet 10 being a rectangular adapter sheet 101, the area S of the welding surface 11 can be calculated using the area formula for rectangles; for the adapter sheet 101 with other regular shapes (such as a circle shape), the area S of the welding surface 11 can be obtained using the corresponding area calculation formula. In some other embodiments of the present application, for example, in the embodiment where the connecting sheet 10 is a tab 102 or a current collector, the area S of the welding surface 11 refers to an area of an overlapping portion between the connecting sheet 10 and the terminal post 20.

The terminal post 20 provides a welding base for the connecting sheet 10, facilitating the welding of the connecting sheet 10 onto the terminal post 20. Herein, the terminal post 20 can directly abut against the welding surface 11 of the connecting sheet 10, thereby ensuring good contact between the connecting sheet 10 and the terminal post 20. Exemplarily, the terminal post 20 can have a cylindrical shape, a square column, or other shapes.

The welding part 30 is located at a junction of the connecting sheet 10 and the terminal post 20, which is mainly formed by melting, mixing and solidification of metals at the junction of the connecting sheet 10 and the terminal post 20. It can be understood that the welding part 30 is a weld seam at the junction of the connecting sheet 10 and the terminal post 20. Herein, the welding part 30 extends through the welding surface 11, and at least part of the welding part 30 is provided in the interior of the connecting sheet 10 and at least part of the welding part 30 is provided in the interior of the terminal post 20, so that the terminal post 20 is connected to the connecting sheet 10, achieving the electrical connection.

In some embodiments of the present application, after the terminal post 20 and the connecting sheet 10 are welded, a peeling force between the terminal post 20 and the connecting sheet 10 is 10 N - 5000 N. In some embodiments of the present application, the peeling force between the terminal post 20 and the connecting sheet 10 is 248 N - 973 N. In some embodiments of the present application, the peeling force between the terminal post 20 used as a negative electrode and the connecting sheet 10 is 360 N - 973 N, and the peeling force between the terminal post 20 used as a positive electrode and the connecting sheet 10 is 248 N - 483 N.

In the embodiments of the present application, by providing the effective fusion width A of the welding part 30 between the connecting sheet 10 and the terminal post 20 to be greater than or equal to 0.1 mm, and providing the first effective fusion depth B of the welding part 30 to be greater than or equal to 0.1 mm, and making the effective fusion width A of the welding part, the area S of the welding surface, and the length L of the track line of the welding part on the welding surface satisfy: $10 \leq S/(A*L) \leq 3000$, a sufficient current flow area is guaranteed between the connecting sheet 10 and the terminal post 20 by the welding part 30, avoiding the problems of disconnection or temperature rise of the battery caused by insufficient current flow area between the connecting sheet 10 and the terminal post 20; at the same time, there are less weld spatter, avoiding an increase in battery internal resistance due to an excessive area ratio of the spatter, which causes safety issues of the battery. Additionally, by setting the effective fusion width A and the first effective fusion depth B of the welding part 30 in this way, it ensures the connection strength between the connecting sheet 10 and the terminal post 20, and prevents the separation of the connecting sheet 10 and the terminal post 20.

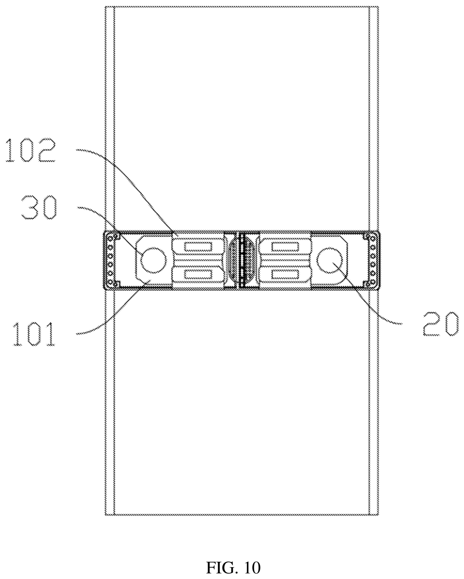

It should be noted that the length L of the track line of the welding part 30 on the welding surface 11 refers to a length of a track line formed by the welding part 30 on the welding surface 11. As shown in FIG. 10, the track line formed by the welding part 30 on the welding surface 11 is circular. In this case, the length L of the track line of the welding part on the welding surface refers to a circumference of the circle, which can be calculated using the formula for the circumference of a circle.

It should be noted that, for the terminal post 20 and the connecting sheet 10 stacked, the current flow area corresponding to the welding part 30 is a product of the effective fusion width A of the welding part 30 and the length L of the track line of the welding part 30 on the welding surface. When the area S of the welding surface 11 of the connecting sheet 10 is larger, a corresponding battery volume is larger, and a current flowing through the terminal post 20 is greater, thus there is a greater demand for the current flow area. Therefore, by making the effective fusion width A of the welding part 30, the area S of the welding surface 11, and the length L of the track line of the welding part on the welding surface 11 satisfy the above relationship, it is possible to ensure sufficient current flow area between the terminal post 20 and the connecting sheet 10 of the batteries with different sizes, so as to avoid the phenomenon of disconnection or temperature rise of the batteries. At the same time, there is less weld spatter, avoiding an increase in battery internal resistance due to an excessive area ratio of the spatter, which causes safety issues of the batteries.

In some embodiments of the present application, the effective fusion width A satisfies: $0.1 \, mm \leq A \leq 3 \, mm$, and the first effective fusion depth B satisfies: $0.1 \, mm \leq B \leq 3 \, mm$, where A/B has a range of 0.5-20.

Furthermore, in some embodiments of the present application, the effective fusion width A of the welding part 30, the area S of the welding surface 11, and the length L of the track line of the welding part 30 on the welding surface 11 satisfy: $10 \leq S/(A*L) \leq 1000$.

Furthermore, in some embodiments of the present application, the effective fusion width A of the welding part 30, the area S of the welding surface 11, and the length L of the track line of the welding part 30 on the welding surface 11 satisfy: $10 \leq S/(A*L) \leq 100$.

In some embodiments of the present application, in some embodiments, the area S of the welding surface 11 satisfies: $10 \, mm^2 \leq S \leq 2000 \, mm^2$.

When the area S of the welding surface 11 is provided within this range, it can be adapted to batteries with different volumes, meet the current flow between the connecting sheet and the terminal post in different batteries, ensure the current flow area between the connecting sheet 10 and the terminal post 20, and ensure the safety performance of the batteries.

Furthermore, in some embodiments of the present application, the area S of the welding surface 11 satisfies: $1000 \, mm^2 \leq S \leq 2000 \, mm^2$.

When the area S of the welding surface 11 is provided within this range, it can be better adapted to the batteries with different volumes, meet the current flow between the connecting sheet and the terminal post in different batteries, ensure the current flow area between the connecting sheet 10 and the terminal post 20, and ensure the safety performance of the batteries.

Furthermore, in some embodiments of the present application, the area S of the welding surface 11 satisfies: $50 \, mm^2 \leq S \leq 1500 \, mm^2$.

When the area S of the welding surface 11 is provided within this range, it can be adapted to batteries with different volumes, meet the current flow between the connecting sheet and the terminal post in different batteries, ensure the current flow area between the connecting sheet 10 and the terminal post 20, and ensure the safety performance of the batteries.

In some embodiments of the present application, the length L of the track line of the welding part 30 on the welding surface 11 satisfies: $1 \, mm \leq L \leq 200 \, mm$.

When the length L of the track line of the welding part 30 on the welding surface 11 is provided within this range, it can be adapted to batteries with different volumes, meet the current flow between the connecting sheet and the terminal post in different batteries, ensure the current flow area between the connecting sheet 10 and the terminal post 20, and ensure the safety performance of the batteries; and at the same time, it can ensure the connection strength between the connecting sheet 10 and the terminal post 20 to avoid the separation of the connecting sheet 10 and the terminal post 20.

Furthermore, in some embodiments of the present application, the length L of the track line of the welding part 30 on the welding surface 11 satisfies: $10 \, mm \leq L \leq 200 \, mm$.

When the length L of the track line of the welding part 30 on the welding surface 11 is provided within this range, it can be better adapted to batteries with different volumes, meet the current flow between the connecting sheet and the terminal post in different batteries, ensure the current flow area between the connecting sheet 10 and the terminal post 20, and ensure the safety performance of the batteries; and at the same time, it can ensure the connection strength between the connecting sheet 10 and the terminal post 20 to avoid the separation of the connecting sheet 10 and the terminal post 20.

Furthermore, in some embodiments of the present application, the length L of the track line of the welding part 30 on the welding surface 11 satisfies: $20 \, mm \leq L \leq 100 \, mm$.

When the length L of the track line of the welding part 30 on the welding surface 11 is provided within this range, it can be better adapted to batteries with different volumes, meet the current flow between the connecting sheet and the terminal post in different batteries, ensure the current flow area between the connecting sheet 10 and the terminal post 20, and ensure the safety performance of the batteries; and at the same time, it can ensure the connection strength between the connecting sheet 10 and the terminal post 20 to avoid the separation of the connecting sheet 10 and the terminal post 20.

In some specific embodiments of the present application, the area S of the welding surface 11 is 2000 mm$^2$, and the length L of the track line of the welding part 30 on the welding surface 11 is 20 mm - 100 mm.

In some specific embodiments of the present application, the connecting sheet 10 has a width of 40 mm and a length of 50 mm, the area S of the welding surface 11 is 2000 mm$^2$, and the length L of the track line of the welding part 30 on the welding surface 11 is 20 mm - 70 mm.

In some specific embodiments of the present application, the connecting sheet 10 has a width of 42 mm and a length of 52 mm, the area S of the welding surface 11 is 2184 mm$^2$, and the length L of the track line of the welding part 30 on the welding surface 11 is 20 mm - 100 mm.

Furthermore, in some embodiments of the present application, a maximum length by which the welding part 30 extends into the interior of the connecting sheet 10 is a second effective fusion depth D, and the first effective fusion depth B and the second effective fusion depth D satisfy the following relationship: $0.25 \leq B/D \leq 7.5$.

Furthermore, in some embodiments of the present application, for example, in the embodiment where the terminal post 20 and the connecting sheet 10 are stacked, the first effective fusion depth B satisfies the following relationship:

$$0.2C \leq B \leq C,$$

where C is a thickness of the terminal post at a welding position.

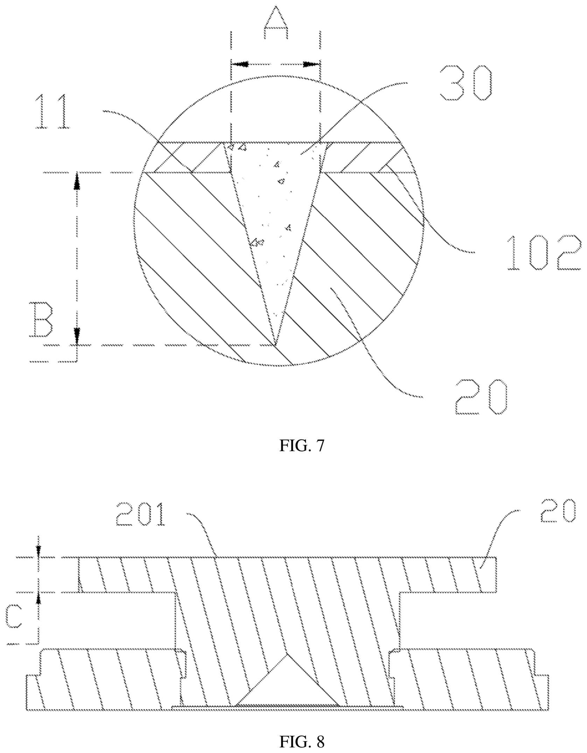

In some embodiments of the present application, referring to FIG. 8, which shows a schematic cross-sectional view of a terminal post in an embodiment of the present application, where the thickness C of the terminal post at the welding position is 1 mm - 3 mm.

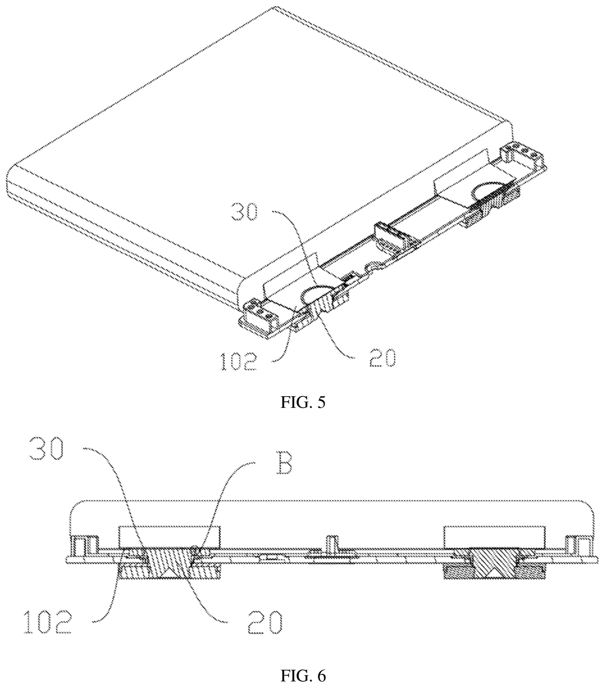

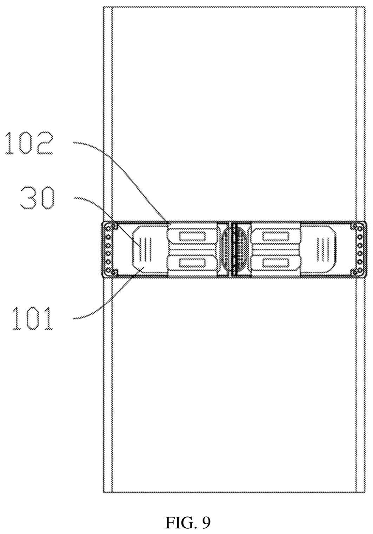

In some embodiments of the present application, for example, in the embodiment where the connecting sheet 10 is a tab 102, referring to FIG. 5, FIG. 6, and FIG. 7, where FIG. 5 shows another axial-side cross-sectional view of a secondary battery provided in an embodiment of the present application; FIG. 6 shows another schematic cross-sectional view of a secondary battery provided in an embodiment of the present application; FIG. 7 shows a schematic enlarged view of position C in FIG. 9 of the present application; the tab 102 is welded to the terminal post 20 by penetration welding, while the effective fusion width A of the welding part 30 is set to be greater than or equal to 0.1 mm, and the first effective fusion depth B of the welding part 30 is set to be greater than or equal to 0.1 mm, ensuring a sufficient current flow area between the connecting sheet 10 and the terminal post 20 through the welding part 30.

In some embodiments of the present application, the connecting sheet 10 has a thickness of 0.4 mm - 2 mm.

In some embodiments of the present application, the connecting sheet has a thickness of 0.6 mm - 1.8 mm.

In some embodiments of the present application, the connecting sheet has a thickness of 1 mm - 1.2 mm.

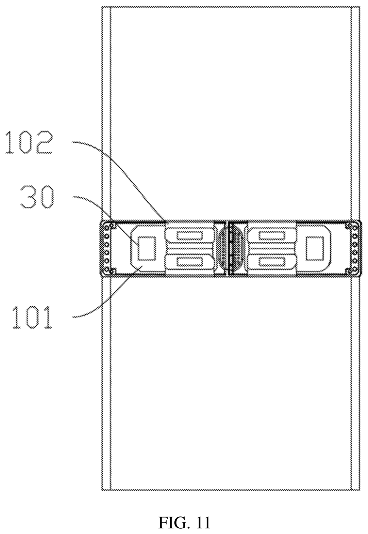

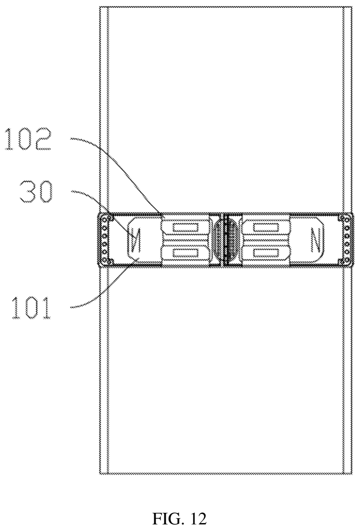

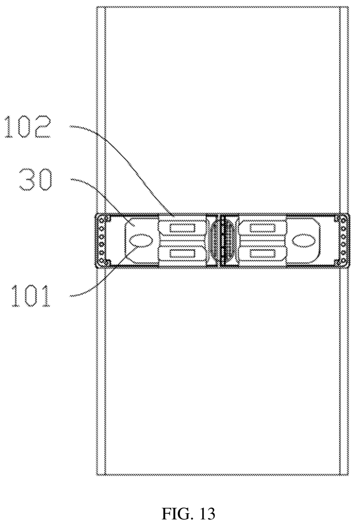

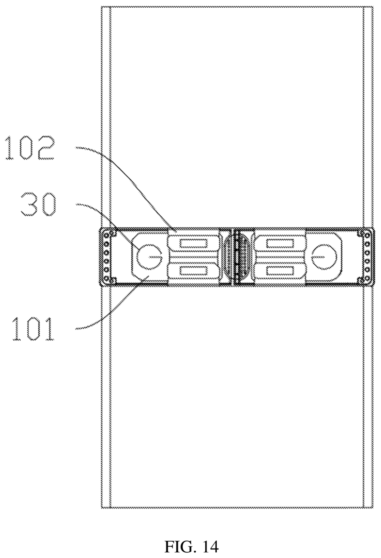

In some embodiments of the present application, the track line of the welding part 30 on the welding surface 11 is a combination of one or more of a spiral shape, a serpentine shape, a circular shape, an elliptical shape, or a linear shape. Exemplarily, referring to FIG. 9, the track line of the welding part 30 on the welding surface 11 is a linear shape. Further exemplarily, continuing to refer to FIG. 10, the track line of the welding part 30 on the welding surface 11 is a circular shape. Further exemplarily, referring to FIG. 11, the track line of the welding part 30 on the welding surface 11 is a rectangular shape. Further exemplarily, referring to FIG. 12, the track line of the welding part 30 on the welding surface 11 is "N"-shaped. Further exemplarily, referring to FIG. 13, the track line of the welding part 30 on the welding surface 11 is an elliptical shape. Further exemplarily, referring to FIG. 14, the track line of the welding part 30 on the welding surface 11 is a combination of circular and linear shapes.

Herein a method for measuring current flow is as follows: 1) firstly, placing temperature-sensing wires at all positions of a battery where temperature needs to be recorded, where the battery is made into a complete battery according to normal processes; 2) connecting the temperature-sensing wires to a multi-channel temperature measuring instrument (which can record temperature fluctuation curves); 3) placing the battery in a thermostatic chamber and charging and discharging it according to preset charge/discharge conditions; 4) exporting data from the multi-channel temperature measuring instrument, fitting each temperature curve to confirm whether temperature rise meets requirements; 5) calculating an average value of current data in the temperature curve, and then measuring current flow data of the battery through a constant-current source device.

Herein a method for measuring an area percentage of spatter on a welding surface based on a total area of a welding track is as follows: 1) laser-cutting a welding part along the welding surface using a cutting machine; 2) grinding a cross section using a water grinder until the cross-section is smooth and free of burrs; 3) placing the cross section under a measuring projector to measure the area of the welding track and the area of the spatter on the surface; dividing the area of the spatter by the welding area of the welding track and then multiplying by 100%.

Herein a method for measuring an effective fusion width A is as follows: 1) laser-cutting a welding part along a welding surface using a cutting machine; 2) grinding a cross section using a water grinder until the cross-section is smooth and free of burrs; 3) placing the cross-section under a measuring projector to measure the maximum width of a welding track on the surface to be the effective fusion width A.

Herein a method for measuring a first effective fusion depth B and a second effective fusion depth D is as follows: 1) cutting a laser-welding part multiple times along a direction perpendicular to a welding surface using a cutting machine; 2) grinding multiple cross sections using a water grinder until the cross sections are smooth and free of burrs; 3) placing the cross sections under a measuring projector to measure multiple data of a length by which the welding part extends into a terminal post and multiple data of a length by which the welding part extends into a connecting sheet; 4) taking the maximum length by which the welding part extends into the terminal post as the first effective fusion depth B, and taking the maximum length by which the welding part extends into the connecting sheet as the second effective fusion depth D.

Herein a method for measuring a welding area S is as follows: 1) measuring, by a measuring projector or an area measuring instrument, an area of a connecting sheet directly as the welding area S when the connecting sheet is an adapter sheet; or measuring, by a measuring projector, an area at which a connecting sheet and a terminal post are overlapped as the welding area S when the connecting sheet is a tab or a current collector.

Herein a method for measuring a length L of a welding track is as follows: 1) cutting a laser-welding part along a welding surface using a cutting machine; 2) grinding a cross section using a water grinder until the cross-section is smooth and free of burrs; 3) placing the cross section under a measuring projector to directly measure the total length L of the track line of the welding part.

Some specific examples of the present application:

| Examples | Welding area S(mm$^2$) | Effective fusion width A (mm) | Length L of welding track (mm) | S/(A*L) | First effective fusion depth B(mm) | Second effective fusion depth D(mm) | Current flow (A) | Percentage of area of weld spatter on welding surface based on total area of welding track |
|---|---|---|---|---|---|---|---|---|
| Example 1 | 8 | 0.1 | 6 | 13.3 | 0.3 | 0.7 | 4.8 | 13% |
| Example 2 | 10 | 2 | 2.5 | 2 | 0.1 | 0.4 | 40 | 19% |
| Example 3 | 50 | 2 | 8 | 3.1 | 0.1 | 0.4 | 128 | 18% |
| Example 4 | 50 | 1 | 10 | 5 | 0.1 | 0.4 | 80 | 16% |
| Example 5 | 50 | 1 | 2.1 | 23.8 | 0.1 | 0.4 | 16.8 | 11% |
| Example 6 | 999 | 2 | 10 | 49.9 | 0.3 | 0.7 | 160 | 9% |
| Example 7 | 999 | 0.7 | 9 | 158.5 | 1 | 1 | 50.4 | 7% |
| Example 8 | 999 | 0.3 | 2 | 1665 | 2 | 2 | 4.8 | 4% |
| Example 9 | 1000 | 1 | 210 | 4.7 | 0.3 | 0.7 | 1680 | 17% |
| Example 10 | 1000 | 0.05 | 500 | 40 | 0.3 | 0.7 | 200 | 10% |
| Example 11 | 1000 | 0.05 | 500 | 40 | 0.05 | 0.7 | 200 | 10% |
| Example 12 | 1000 | 0.05 | 200 | 100 | 0.3 | 0.7 | 80 | 8% |
| Example 13 | 1500 | 1 | 3 | 500 | 1 | 1 | 24 | 6% |
| Example 14 | 1500 | 1 | 3 | 500 | 1 | 2 | 24 | 5% |
| Example 15 | 1500 | 0.3 | 2 | 2500 | 2 | 2 | 4.8 | 3% |
| Example 16 | 1600 | 0.1 | 2 | 8000 | 2 | 2 | 1.6 | 2% |
| Example 17 | 1800 | 3 | 100 | 6 | 2 | 1.5 | 2400 | 15% |
| Example 18 | 1800 | 0.1 | 1 | 18000 | 3 | 2 | 0.8 | 2% |
| Example 19 | 2000 | 1 | 200 | 10 | 0.3 | 0.7 | 1600 | 14% |

(continued)

| Examples | Welding area S(mm²) | Effective fusion width A (mm) | Length L of welding track (mm) | S/(A*L) | First effective fusion depth B(mm) | Second effective fusion depth D(mm) | Current flow (A) | Percentage of area of weld spatter on welding surface based on total area of welding track |
|---|---|---|---|---|---|---|---|---|
| Example 20 | 2000 | 3 | 50 | 13.3 | 2 | 1.5 | 1200 | 12% |
| Example 21 | 2000 | 0.1 | 1 | 20000 | 3 | 2 | 0.8 | 1% |
| Example 22 | 3000 | 3 | 200 | 5 | 0.3 | 0.7 | 3600 | 16% |

Comparative example:

| Comparative Examples | Welding area S (mm²) | Effective fusion width A(mm) | Length L of welding track(mm ) | S/(A* L) | First effective fusion depth B (mm) | Current flow (A) | Percentage of area of weld spatter on welding surface based on total area of welding track |
|---|---|---|---|---|---|---|---|
| Comparative Example 1 | 8 | 2 | 4 | 1 | 0.1 | 64 | 50% |
| Comparative Example 2 | 8 | 2 | 4 | 1 | 4 | 64 | 38% |
| Comparative Example 3 | 1000 | 2 | 500 | 1 | 0.1 | 6000 | 27% |
| Comparative Example 4 | 1000 | 4 | 200 | 1.25 | 0.1 | 4800 | 25% |
| Comparative Example 5 | 1000 | 4 | 200 | 1.25 | 2 | 4800 | 25% |
| Comparative Example 6 | 1000 | 4 | 200 | 1.25 | 4 | 6400 | 25% |
| Comparative Example 7 | 1000 | 0.1 | 0.4 | 25000 | 0.1 | 0.32 | 2% |
| Comparative Example 8 | 1000 | 0.03 | 1 | 33333 .33 | 0.1 | 0.24 | 3% |
| Comparative Example 9 | 3000 | 2 | 1000 | 1.5 | 0.1 | 10000 | 22% |
| Comparative Example 10 | 3000 | 0.04 | 2 | 37500 | 0.1 | 0.64 | 1% |

In some specific embodiments of the present application, the effective fusion width A of the welding part 30, the area S of the welding surface 11, and the length L of the track of the welding part 30 on the welding surface 11 satisfy the relationship: $2 \leq S/(A*L) \leq 20000$, and the battery has a current flow of 0.8 A - 3600 A, which can meet the current flow requirements of batteries with different sizes and volumes. There is a sufficient current flow area between the connecting sheet 10 and the terminal post 20, so the battery has good safety performance. In addition, the peeling force between the connecting sheet 10 and the terminal post 20 is within the range of 10 N - 5000 N, resulting in good connection strength between the connecting sheet and the terminal post, so that the connecting sheet 10 and the terminal post 20 are not easy to separate. Moreover, there is less spatter during welding, leading to better welding effect of the battery, which makes the internal resistance of the battery meet the requirements and ensures good safety performance of the battery. However, in the comparative examples, when the effective fusion width A of the welding part 30, the area S of the welding surface 11, and the length L of the track of the welding part 30 on the welding surface 11 satisfy the relationship: $S/(A*L) > 20000$, the battery has insufficient current flow, and there is small current flow area between the connecting sheet 10 and the terminal post, which easily causes safety problems of the battery; in addition the peeling force between the connecting sheet 10 and the terminal post 20 is small, which easily causes separation of the connecting sheet 10 and the terminal post 20. When S/(A*L) < 2, the area proportion of the spatter during welding exceeds 20%, leading to poor welding effect, and an increase in the internal resistance of the battery, thereby affecting the safety performance of the battery.

It should be noted that the above description regarding the secondary battery is intended to clearly illustrate the implementation and verification process of the present application. Those skilled in the art can also make equivalent amendments and designs under the guidance of the present application. Exemplarily, the track line of the welding part 30 on the welding surface 11 can be designed to an "S" shape or an "M" shape.

The above are merely preferred embodiments of the present invention and are not intended to limit the scope of the embodiments of the present invention. All equivalent changes and modifications made in accordance with the shape, structure, characteristics and spirit described in the scope of the claims of the present invention shall be included in the scope of the claims of the present invention.

## Claims

1. A secondary battery, comprising a connecting sheet and a terminal post, wherein

   the connecting sheet has a welding surface;
   the terminal post and the connecting sheet are stacked, and the welding surface faces the terminal post;
   the connecting sheet is fixed to the terminal post by welding, and a welding part is formed between the connecting sheet and the terminal post; at least part of the welding part is provided in an interior of the connecting sheet and at least part of the welding part is provided in an interior of the terminal post; the welding part penetrates through the welding surface, and forms a welding track on the welding surface;
   an effective fusion width A of the welding part, an area S of the welding surface, and a length L of the welding track satisfy the following relationship: $2 \leq S/(A*L) \leq 20000$, wherein the effective fusion width A is a maximum width of the welding track.

2. The secondary battery according to claim 1, wherein the effective fusion width A satisfies: $0.1\,mm \leq A \leq 3\,mm$, and a first effective fusion depth B satisfies: $0.1\,mm \leq B \leq 3\,mm$, wherein the first effective fusion depth B is a maximum length by which the welding part extends into the interior of the terminal post, and A/B has a range of 0.5-20.

3. The secondary battery according to claim 1, wherein the effective fusion width A of the welding part, the area S of the welding surface, and the length L of the welding track satisfy: $10 \leq S/(A*L) \leq 1000$.

4. The secondary battery according to claim 1, wherein the effective fusion width A of the welding part, the area S of the welding surface, and the length L of the welding track satisfy: $10 \leq S/(A*L) \leq 100$.

5. The secondary battery according to claim 2, wherein the first effective fusion depth B and a second effective fusion depth D satisfy the following relationship: $0.25 \leq B/D \leq 7.5$, wherein the second effective fusion depth D is a maximum length by which the welding part extends into the interior of the connecting sheet.

6. The secondary battery according to claim 1, wherein the area S of the welding surface satisfies: $10\,mm^2 \leq S \leq 2000\,mm^2$.

7. The secondary battery according to claim 1, wherein the length L of the welding track satisfies: $1\,mm \leq L \leq 200\,mm$.

8. The secondary battery according to claim 1, wherein the connecting sheet has a thickness of 0.4 mm - 2 mm.

9. The secondary battery according to claim 1, wherein the connecting sheet is an adapter sheet, a tab, or a current collector.

10. The secondary battery according to claim 1, wherein the welding track is a combination of one or more of a spiral shape, a serpentine shape, a circular shape, an elliptical shape, or a linear shape.

11. The secondary battery according to claim 1, wherein a peeling force between the terminal post and the connecting sheet is 248 N - 973 N.

EP 4 685 982 A1

FIG. 1

FIG. 2

10

FIG. 3

FIG. 4

FIG. 5

FIG. 6

FIG. 7

FIG. 8

FIG. 9

FIG. 10

FIG. 11

FIG. 12

FIG. 13

FIG. 14

## INTERNATIONAL SEARCH REPORT

| International application No. |
| --- |
| **PCT/CN2024/070289** |

**A. CLASSIFICATION OF SUBJECT MATTER**

H01M 50/528(2021.01)i

According to International Patent Classification (IPC) or to both national classification and IPC

**B. FIELDS SEARCHED**

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNTXT, ENTXT, ENTXTC, WPABS, CNKI: 极柱, 连接片, 焊接, 面积, 长度, 宽度, 底部, 熔宽, Pole, connecting tab, weld, area, length, width, bottom, melt width

**C. DOCUMENTS CONSIDERED TO BE RELEVANT**

| Category* | Citation of document, with indication, where appropriate, of the relevant passages | Relevant to claim No. |
| --- | --- | --- |
| PX | CN 219350580 U (SUNWODA ELECTRIC VEHICLE BATTERY CO., LTD.) 14 July 2023 (2023-07-14) claims 1-11 | 1-11 |
| PX | CN 219717189 U (SUNWODA ENERGY TECHNOLOGY CO., LTD.) 19 September 2023 (2023-09-19) description, paragraphs 111-112 | 1-11 |
| A | CN 218569021 U (EVE ENERGY CO., LTD.) 03 March 2023 (2023-03-03) description, paragraphs 7-25, and figures 1-2 | 1-11 |
| A | CN 209626264 U (CONTEMPORARY AMPEREX TECHNOLOGY CO., LTD.) 12 November 2019 (2019-11-12) entire document | 1-11 |
| A | CN 215451692 U (KAIBO ENERGY TECHNOLOGY (CHENGDU) CO., LTD.) 07 January 2022 (2022-01-07) entire document | 1-11 |
| A | JP 2020013706 A (TOYOTA INDUSTRIES CORP.) 23 January 2020 (2020-01-23) entire document | 1-11 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **12 March 2024** | **19 March 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/070289**

| Patent document cited in search report | | | Publication date (day/month/year) | Patent family member(s) | Publication date (day/month/year) |
|---|---|---|---|---|---|
| CN | 219350580 | U | 14 July 2023 | None | |
| CN | 219717189 | U | 19 September 2023 | None | |
| CN | 218569021 | U | 03 March 2023 | None | |
| CN | 209626264 | U | 12 November 2019 | None | |
| CN | 215451692 | U | 07 January 2022 | None | |
| JP | 2020013706 | A | 23 January 2020 | None | |

Form PCT/ISA/210 (patent family annex) (July 2022)

**EP 4 685 982 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202320730059